## Europäisches Patentamt
## European Patent Office
## Office européen des brevets

(11) Veröffentlichungsnummer: **0 105 023**
B1

(12) **EUROPÄISCHE PATENTSCHRIFT**

(45) Veröffentlichungstag der Patentschrift:
26.02.86

(21) Anmeldenummer: 83810128.5

(22) Anmeldetag: 28.03.83

(51) Int. Cl.⁴: **A 01 G 9/00,** A 01 G 27/00

(54) Vorrichtung zur langandauernden Nährstoffversorgung von Topfpflanzen.

(30) Priorität: 02.09.82 CH 5225/82

(43) Veröffentlichungstag der Anmeldung:
04.04.84 Patentblatt 84/14

(45) Bekanntmachung des Hinweises auf die Patenterteilung:
26.02.86 Patentblatt 86/9

(84) Benannte Vertragsstaaten:
AT BE CH DE FR GB IT LI LU NL SE

(56) Entgegenhaltungen:
GB - A - 2 069 926
US - A - 3 299 566
US - A - 3 384 993

(73) Patentinhaber: Airwick AG, Postfach, CH-4002 Basel
(CH)

(72) Erfinder: Gombert, Jean-Marie, 3, route de Poitiers
Neuville-du-Poitou, F-86170 Avanton (FR)

(74) Vertreter: Schirner, Rolf et al, Patentabteilung der
CIBA-GEIGY AG Postfach, CH-4002 Basel (CH)

## Beschreibung

Vorliegende Erfindung betrifft eine Vorrichtung zur regelmässigen Versorgung von Topfpflanzen über einen längeren Zeitraum.

Im Handel gibt es eine grosse Anzahl von langsam diffundierenden Düngemitteln, die entweder in Form von Körnern oder in Form von Stäbchen vorliegen. Im Gebrauch ergeben diese Produkte jedoch unbefriedigende Resultate oder bereiten Schwierigkeiten bei der Anwendung; in der Tat versorgen die beim Gebrauch einzeln und leicht in die Topferde eingedrückten Stäbchen nur den bevorzugten Teil der Erde, wo sie sich befinden, und nur die in der Nähe dieses Teils liegenden Wurzeln erhalten die aus dem Stäbchen freigesetzten düngenden Elemente; wegen der zwangsläufig kleinen Grösse des Stäbchens ist ausserdem die verfügbare Menge Düngemittel relativ gering, woraus sich eine begrenzte Wirkungszeit ergibt. Werden die Körner auf die Oberfläche der Erde gelegt, so werden sie von dem darin enthaltenen Wasser nicht befeuchtet, ausser für sehr kurze Zeit beim Giessen, und ihre Ergiebigkeit ist deshalb sehr gering; gute Ergiebigkeit ist durch homogene Verteilung der Körner in der Erde erhältlich, doch erfordert dies die Entfernung der Erde aus dem Topf und Vermischen mit den Körnern, was sich in Wohnungen, wo Topfpflanzen im allgemeinen zu finden sind, kaum sauber durchführen lässt; es ist leicht zu verstehen, dass die Besitzer von Topfpflanzen dies sehr ungern vornehmen.

Die Anmelderin hat nun gefunden, dass sich eine ausgezeichnete Gleichmässigkeit und eine lange Wirkungszeit bei der Versorgung von Topfpflanzen mittels Lang zeitkörnern erzielen lassen, wenn diese auf einer unter den Topf gelegten Fläche verteilt und befestigt sind. Die Anmelderin hat gefunden, dass auf diese Weise unabhängig von der angewandten Giessmethode, sei es von oben oder unter dem Topf, oder unabhängig von dem Ausmass und der Häufigkeit des Giessens eine ausgezeichnete Nährstoffversorgung für einen langen Zeitraum aufrechterhalten wird.

Gegenstand der Erfindung ist somit eine Vorrichtung zur langandauernden Nährstoffversorgung von Topfpflanzen, enthaltend einen körnigen Langzeitdünger, der mindestens ein unter Stickstoff, Phosphor und Kalium ausgewähltes Düngeelement enthält, welche dadurch gekennzeichnet ist, dass sie aus einem flachen Träger, an dessen Oberseite die Düngemittelkörner anhaften, und einer wasserdurchlässigen, die Körner zurückhaltenden Deckfolie über dem flachen Träger besteht.

Unter körnigem Langzeitdünger versteht man dabei einen Dünger, der unter der Einwirkung des Wassers fortschreitend und über mindestens mehrere Tage eines oder mehrere wasserlösliche Düngemittel freisetzen kann; ein solcher Dünger besteht beispielsweise aus einem wasserlöslichen Dünger, der mit einem Ueberzug geringer Wasserdurchlässigkeit versehen ist; er kann auch aus einer oder mehreren wasserunlöslichen Substanzen bestehen, die sich jedoch in Berührung mit Wasser langsam zu löslichen Düngesubstanzen zersetzen.

Als wasserlösliche Düngemittel seien hier beispielsweise Harnstoff und dessen lösliche Derivate, die aus Salpetersäure und/oder Phosphorsäuren einerseits und Alkali- und/oder Ammoniumionen andererseits gebildeten Salze und die aus von den obigen verschiedenen, landwirtschaftlich verträglichen Säuren einerseits und Ammonium- und/oder Kaliumionen andererseits gebildeten Salze genannt.

Als wasserunlösliche Substanzen, die sich zu löslichen Düngesubstanzen zersetzen können, seien beispielsweise die folgenden genannt:
- verschieden polymerisierte, aus Harnstoff und Formaldehyd gebildete Kondensate (DE-C- 431 585);
- verschieden polymerisierte, aus Harnstoff und Acetaldehyd gebildete Kondensate(JP-Anm. 70/17 123; Z. Pflanz.Düng. Bod., 1956, 75, 1; 1959, 86, 120, 131, 206);
- verschieden polymerisierte, aus Harnstoff und Isobutyraldehyd gebildete Kondensate(DE-C- 1 146 080; FR-A- 1 401 000; US-A- 3 222 528 und US-A- 3 326 665);
- verschieden polymerisierte, aus Harnstoff und Crotonaldehyd gebildete Kondensate(DE-C- 1 081 482; US-A- 3 054 669 und US-A- 3 190 741);
- verschieden polymerisierte, aus Harnstoff und Glyoxal gebildete Kondensate (US-A- 3 061 423);
- Cyanuramid (US-A- 3 142 558);
- ammonisierter Leonhardit (US-A- 3 264 084);
- Ammoniumpolyphosphate (US-A- 3 171 733 und US-A- 3 342 579);
- Ammoniummetallphosphate (US-A- 3 125 411 und US-A- 3 174 844);
- Phosphazene (Symposium sur la chimie des compos*ès du Phosphore, Prag, Sept. 1970; Chem. & Ind., London, 1970, S. 1407).

Wird das Düngemittel unter einem Ueberzug geringer Wasserdurchlässigkeit zurückgehalten, so kann dieser eine einfache Verkleidung eines Düngemittelkerns sein, der das oder die düngenden Elemente enthält, oder gleichzeitig eine die verschiedenen agglomerierten, gleichen oder unterschiedlichen, den Kern darstellenden Teilchen zusammenhaltende Bindung bilden. Die Durchlässigkeit des Ueberzugs kann auf natürlicher Porosität des Materials oder auf einer künstlich hervorgerufenen Porosität, wie zum Beispiel durch Inklusion fein gepulverter löslicher Salze oder poröser Teilchen in einem undurchlässigen Material beruhen.

Als zur Bildung des Ueberzugs verwendbare Materialien seien beispielsweise die folgenden genannt, die für sich oder in Kombination angewandt werden:
- synthetische Homopolymere und Copolymere (DE-C- 1 257 801 und DE-C-2 021 259);
- natürliche hydrophobe Produkte wie Asphalte, Wachse, Fette, Oele, Paraffine und deren Derivate (DE-C- 923 792);
- elementarer Schwefel und diesen enthaltende Zussammensetzungen US-A- 3 100 968, US-A- 3 206 297, US-A- 3 295 950, US-A- 3 313 613 und US-A- 3313 615);

- in der pharmazeutischen Industrie für enterische und sonstige Implantate und Pillen gebräuchliche Materialien (J. Am. Pharm. Ass., Prat. Pharm. Ed., 1941, 30, 276; 1945, 34, 135, 1959, 48, 244 und451; 1960, 49, 121 und 344).

Bei der erfindungsgemässen Vorrichtung ist es der die Körner umkleidende Mantel, welcher die Rolle einer halbdurchlässigen Membran spielt, um die fortschreitende Freisetzung der Nährstoffe sicherzustellen.

Eine angemessene Menge der Nährstoffe lässt sich leicht der Pflanze nach Bedarf zuführen, wenn der Gehalt und das Gewicht der in der Vorrichtung enthaltenen Körner bekannt sind.

Eine bekannte Technik zur Verwendung mit gleichförmig über die Oberfläche eines wasserlöslichen Films verteilten Schädlingsbekämpfungsmitteln gestattet es, ohne weiteres ein chemisches Mittel auf eine gegebene Oberfläche aufzubringen (US-A- 3 299 566); in diesem Fall ist es der Träger selbst, der die Freisetzung der Elemente durch seinen Zerfall bei Berührung mit Wasser sicherstellt.

Die den flachen Träger bedeckende und die Körner zurückhaltende durchlässige Folie kann starr oder biegsam sein, wobei letztere Struktur bevorzugt ist. Sie kann natürlich durchlässig oder künstlich so gemacht sein. Eine natürlich durchlässige Folie wählt man beispielsweise unter vorzugsweise ungeleimten Papieren, Filzen, Fliesstoffen, Geweben, natürlichen oder synthetischen Schwämmen sowie gefritteten Polymeren aus. Bevorzugt wird die Folie unter Vliesstoffen ausgewählt; bei der erfindungsgemässen Vorrichtung verwendet man vorzugsweise Synthesefasern (Polyester, Viskose...), welche gegenüber Naturfasern den Vorteil aufweisen, dass sie bei längerem Verweilen in Wasser nicht verfaulen und gute Kapillaraszension des Wassers als Vehikel für Schädlingsbekämpfungsmittel sicherstellen.

Die Verwendung von aus synthetischen Stoffen bestehenden durchlässigen Folien ist ähnlich wie im Gartenbaugebiet zur Aufrechterhaltung guter Feuchtigkeit unter den Töpfen zusammen mit Kapillaraszension des Wassers (GB-A- 2 069 926). Bei dieser Technik handelt es sich ausschliesslich um das automatische Begiessen grosser Pflanzenmengen, wie man sie auf Gewächshausregalen findet, und nicht um deren Versorgung oder Behandlung durch Zufuhr im Wasser gelöster chemischer Mittel.

Eine normalerweise undurchlässige Folie lässt sich durch vielfache Durchlöcherung durchlässig machen; eine solche Folie wählt man unter Filmen aus plastomerem oder elastomerem Material, wie beispielsweise Polyalkylenen, Polybutadienen, Polyvinylchloriden, Polyacrylnitrilen, Polystyrolen und Kautschuktypen aus.

Die Dicke der durchlässigen Folie ist nicht kritisch und hängt vor allem von ihrer Art ab. Eine durchlöcherte, ansonsten undurchlässige Folie weist vorzugsweise eine Dicke zwischen 0,02 und 1 mm und besonders bevorzugt zwischen 0,05 und 0,5 mm auf, während eine von Natur aus durchlässige Folie vorzugsweise eine Dicke zwischen 0,1 und 20 mm und besonders bevorzugt zwischen 0,3 und 10 mm besitzt.

Der flache Träger kann starr oder biegsam sein; insbesondere kann er wasserdurchlässig oder so gemacht und dann von gleicher Art wie die durchlässige Folie sein.

Ist der flache Träger wasserundurchlässig, so kann man ihn unter ssmtlichen Stoffen auswählen, die als dünnes Blatt vorliegen können, wie beispielsweise Aluminium, plastomere oder elastomere Materialien und mit einer hydrophoben Beschichtung versehener Karton. Der flache Träger kann auch aus einer undurchlässigen Folie bestehen, die auf der Innenseite mit einer durchlässigen Folie kaschiert ist.

Die Dicke des flachen Trägers ist nicht kritisch und hängt hauptsächlich von dessen Art ab. Ist der flache Träger wasserundurchlässig, so liegt seine Dicke vorzugsweise zwischen 0,5 und 1 mm und besonders bevorzugt zwischen 0,1 und 0,5 mm. Ist der flache Träger wasserdurchlässig, so wählt man den oder die Stoffe, aus denen er besteht, vorzugsweise unter den obengenannten für die natürlich durchlässige Folie vorgesehenen aus, und seine Dicke liegt vorzugsweise zwischen 0,1 und 20 mm und besonders bevorzugt zwischen 0,3 und 10 mm.

Der flache Träger und die durchlässige Folie besitzen vorzugsweise die gleiche Gestalt, und ihre Abmessungen sind annähernd gleich, wobei jedoch die der durchlässigen Folie kleiner als die des Trägers sein können. Die sich aus der Form des flachen Trägers und der durchlässigen Folie ergebende Gestalt der Vorrichtung ist nicht kritisch; sie kann insbesondere ein Dreieck, Viereck, irgendein Vieleck, einen Kreis oder eine Ellipse darstellen, wobei diese Gestalt und deren Abmessungen vorzugsweise denen der Unterseite des Topfes angepasst sind, unter dem die Vorrichtung aufgestellt werden soll, wobei jedoch eine Vorrichtung zur Aufnahme einer Gruppe von Töpfen denkbar ist; so versteht es sich, dass die Oberfläche der Vorrichtung vorteilhafterwei— se eine Oberfläche zwischen 50 und 1 000 cm$^2$ aufweist, wobei diese Oberfläche vorzugsweise zwischen 100 und 500 cm$^2$ liegt.

Im Fall einer Vorrichtung viereckiger oder runder Gestalt liegt deren Seitenlänge oder Durchmesser vorzugsweise zwischen 7 und 30 cm und besonders bevorzugt zwischen 10 und 25 cm.

Nach einer zweckmässigen Variante kann der flache Träger, falls er undurchlässig und starr ist, um seinen Umfang herum eine nach oben weisende Kante besitzen, was der Vorrichtung die Gestalt und Verwendbarkeit eines Napfes, einer Untertasse oder einer Schale verleiht, die dazu dienen, den die Pflanze enthaltenden Topf oder mehrere Töpfe aufzunehmen.

Die Verwendung einer durchlässigen Folie oder eines Kunststoffilms als Träger für Düngeelemente ist ähnlich wie in der Landwirtschaft (US-A-3 384 993) für unterschiedliche Anwendungen (Stroh, Verringerung von Wasserverlusten aus dem Boden durch Auslaugung und Verdunstung, Mittel zur Verhinderung des Auflaufens von Unkräutern, Lieferung von mit einem wasserlöslichen Film innig verbundenen Nährelementen), doch ist diese Technik auf grosse Flächen zugeschnitten.

Die Körner des Langzeitdüngers sind vorzugsweise regelmässig über die Oberseite des flachen Trägers verteilt, ohne dass jedoch diese Regelmässigkeit ein kritischer Faktor wäre. Die Körner können einen Teil oder die gesamte Oberfläche dieser Seite besetzen, wobei die besetzte Oberfläche natürlich von der Menge der vorhandenen Körner abhängt. Wenn die ganze Oberfläche besetzt ist, kann die Körnerschicht einfach oder mehrfach sein; ist sie mehrfach so haften die Körner der oberen Schicht(en) an den Körnern der Schicht darunter, wobei der dabei verwendete Klebstoff gleich oder verschieden sein kann wie der zur Befestigung der unteren Schicht auf dem flachen Träger.

Die zur Befestigung der Körner auf dem flachen Träger verwendbaren Klebstoffe sind alle in der Technik bekannten. Sie werden entweder als solche eingesetzt (beispielsweise Leim oder Eiweiss) oder im geschmolzenen Zustand (beispielsweise Schmelzharze, Asphalt oder Wachse) oder als Lösung in Wasser oder einem organischen Lösungsmittel.

Unter zweckmässigen Klebstoffen seien beispielsweise die folgenden genannt:
- natürliche Kleber und Leime, wie Knochenleim, Fischleim, Hautleim, Caseinleim, Leinölleim, Kolophoniumleim, Seeleim, Stechpalmenleim, Mistelleim, englischer Leim, Leimtränke, Osseinleim und russischer Leim;
  - tierische oder pflanzliche Proteine;
  - Gelatinen, Albumine und Caseine;
  - Zucker wie Saccharose, Glucose und Honig;
  - Polysaccharide wie Stärke und deren wasserlösliche Derivate, Alginate, Karraghenate, Dextran, Dextrin, Pektin, Chitin und dessen wasserlösliche Derivate, Bocksdorngummi, Gummi arabicum, Johannisbrotkerngummi, Guargummi, indischer Gummi, Karayagummi, Gummilack, Lärchengummi, Senegalgummi, Tamarindengummi, Traganthgummi, Xanthangummi, Methylcellulosen, Hydroxyalkylcellulosen, Carboxymethylcellulosen und Celluloseester;
  - Asphalte, Wachse und Paraffine;
  - Kautschukarten wie Latex, Polybutadien, Polyisoprene und Polychloroprene;
  - Natriumsilikat;
  - homopolymere oder copolymere synthetische Wachse und Harze, wie Polyalkylene, Polyvinylalkohole, Polyvinylester, Polyvinyläther, Polyvinylacetale, Polystyrole, Polyvinylpyrrolidone, Polyacrylester, Polymethacrylester, Polyallylester, Polycaprolactame, Polyhexamethylenadipamide, Polymethylensebacinamide, Polyurethane, Polyacrylnitrile, Harnstoff/Formaldehyd-, Harnstoff/Melamin-, Phenol/Formaldehyd- und Phenol/Butyraldehydharze, Epoxidharze, Maleinsäurepolyester, Phthalsäurepolyester und Abietinsäurepolyester.

Die bevorzugten Klebstoffe sind wasserlöslich; sie können ausserdem einen Weichmacher enthalten; liegt dieser vor, so wählt man ihn unter solchen aus, die mit dem Klebstoff verträglich sind, sowie bei Verwendung eines Lösungsmittels unter darin löslichen Weichmachern.

Als Weichmacher seien insbesondere Dibutyl-, Dihexyl-, Dicyclohexyl-, Dioctyl-, Didecyl- und Diphenyladipat, -phthalat und -sebacinat, Isopropyl-, Butyl- und Isobutylmyristat, -palmitat und -stearat, Triphenyl-, Trikresyl-, Tributyl-, Trihexyl-, Tricyclohexyl-, Trioctyl-, Tridecylund Tridodecylphosphat, Polyäthylenglykole, Polypropylenglykole, Polybutylenglykole, die aus Glycerin mit Carbonsäuren der Fettsäurereihe gebildeten Mono-, Di- und Triester, aus niederen Alkanolen und Zitronensäure gebildete Ester und Kondensationsprodukte des Aethylenoder Propylenoxyds mit Alkylphenolen, Fettalkoholen und pflanzlichen Oelen genannt. Ist der Klebstoff wasserlöslich und wird ein Weichmacher verwendet, so wählt man letzteren vorzugsweise unter solchen aus, die in Wasser löslich sind.

Gegebenenfalls kann die erfindungsgemässe Vorrichtung neben den Düngerkörnern einen oder mehrere Pflanzenwirkstoffe enthalten, die man unter Spurenelementen, Algiziden, Fungiziden, Insektiziden, Nematoziden und Wachstumsregulatoren auswählt. Bei Vorliegen dieser Wirkstoffe werden diese ebenfalls in Form von Langzeitkörnern angewandt.

Der zum Befestigen der Düngerkörner sowie gegebenenfalls der übrigen Körnerart(en) bestimmte Klebstoff wird vorzugsweise vor dem Aufbringen der Körner auf dem flachen Träger abgeschieden; er lässt sich jedoch auch mit den Körnern schon an Ort und Stelle oder gleichzeitig mit diesen aufbringen, was insbesondere in dem bestimmten Fall, wo der Klebstoff wasserlöslich ist, keine Schwierigkeiten bereitet. Gemäss einer zweckmässigen Variante ist der Klebstoff identisch mit dem die Körner einhüllenden Mantel, und der Aufbau dieses Mantels erfolgt ungefähr gleichzeitig mit dem Aufbringen und Befestigen der Körner.

Der Klebstoff lässt sich auf jegliche in der Technik bekannte Weise aufbringen, wie beispielsweise durch Streichen mit einem Pinsel und/ oder einer Walze, Aufstreuen, Zerstäuben unter Druck oder Tränken; natürlich kann man den Klebstoff vor dem Zuschneiden des flachen Trägers in dessen endgültige Gestalt und Abmessungen, beispielsweise unter Verwendung langer Bänder, auf denen der Klebstoff kontinuierlich aufgebracht wird, aufbringen. Liegt der Klebstoff als Lösung in Wasser oder einem organischen Lösungsmittel vor, so erfolgt nach der Aufbringung eine vollständige oder teilweise Trocknung durch Erhitzen und/oder Ablüften. Wird der Klebstoff oberhalb Normaltemperatur aufgebracht, um ihn zu schmelzen oder fliessfähig zu machen, so wird nach dem Aufbringen abgekühlt. Ist der Klebstoff ein Festkörper, der zum Befestigen der Körner geschmolzen werden muss, so kann er als Pulver oder Schuppen auf die Oberfläche des flachen Trägers aufgebracht und durch Erhitzen dieser Oberfläche geschmolzen werden; eine zweckmässige Variante im letzteren Fall besteht darin, dass man gleichzeitig die zu befestigenden Körner und den Klebstoff im festen Zustand verteilt auf den flachen Träger aufbringt, der vor, während oder nach dieser Aufbringung erhitzt wird.

Die Körner werden in irgendeiner in der Technik bekannten Weise auf den flachen Träger aufgebracht und darauf verteilt, wie beispielsweise mittels Dosierverteilern mit gegebenenfalls schwingenden Sieben; man kann den flachen Träger auf einen Schwingtisch legen, um homogene Verteilung der Körner über die gesamte Oberfläche des flachen Trägers zu erreichen oder zu verbessern.

Die durchlässige Folie wird mit der Vorrichtung entweder durch Befestigen auf den Körnern oder auf dem flachen Träger vereinigt. Befestigung auf den Körnern erhält man mittels eines Klebstoffs, wofür man zweckmässig denselben wie zur Befestigung der Körner auf dem flachen Träger verwendet; der Klebstoff wird vorzugsweise auf die Unterseite der durchlässigen Folie nach einer der obengenannten Methoden aufgebracht; er kann auch vor dem Anbringen der durchlässigen Folie auf die Körner aufgetragen werden; gemäss einer zweckmässigen Variante werden die Körner gleichzeitig unter Anwendung einer der oben erwähnten Methoden an dem flachen Träger und der durchlässigen Folie befestigt.

Wird die durchlässige Folie auf dem flachen Träger befestigt, so erfolgt dies vorzugsweise um den ganzen Umfang herum; Befestigung erfolgt nach irgendeiner bekannten Methode, wie Kleben in der Kälte oder Wärme, Schweissen, Heftklammern oder Nähen; eine zweckmässige Befestigungsmethode durch Schweissen besteht darin, dass man durch Erhitzen des Umfangs den Klebstoff und/oder das den flachen Träger und/oder die durchlässige Folie darstellende Material schmilzt.

Je nach der Art der Materialien, aus denen der flache Träger und die durchlässige Folie bestehen, und der Befestigungsmethode der letzteren kann die erfindungsgemässe Vorrichtung insbesondere die Gestalt einer Scheibe, eines Kissens, eines Schichtkörpers oder eines Napfs aufweisen, wobei letzterer gegebenenfalls innen gepolstert sein kann.

Die erfindungsgemässe Vorrichtung ist mit jeder Art Topf verwendbar, unabhängig von der Art des Materials, aus dem der Topf besteht, wobei die wesentliche Voraussetzung ist, dass die Unterseite des Topfs eine poröse Struktur und/oder mindestens eine Durchgangsöffnung aufweist.

## Patentansprüche

1. Vorrichtung zur langandauernden Nährstoffversorgung von Topfpflanzen, enthaltend einen körnigen Langzeitdünger, der mindestens ein unter Stickstoff, Phosphor und Kalium ausgewähltes Düngeelement enthält, dadurch gekennzeichnet, dass sie aus einem flachen Träger, an dessen Oberseite die Düngemittelkörner anhaften, und einer wasserdurchlässigen, die Körner zurückhaltenden Deckfolie über dem flachen Träger besteht.

2. Vorrichtung nach Anspruch 1, dadurch gekennzeichnet, dass der körnige Langzeitdünger aus einem Kern aus wasserlöslichem, mit einem Ueberzug von geringer Wasserdurchlässigkeit versehenen Düngemittel besteht.

3. Vorrichtung nach Anspruch 2, dadurch gekennzeichnet, dass das wasserlösliche Düngemittel mindestens eine unter Harnstoff und dessen löslichen Derivaten, den aus Salpetersäure und/oder Phosphorsäuren einerseits und Alkali und/oder Ammoniumionen andererseits gebildeten Salzen und den aus von den obigen verschiedenen, landwirtschaftlich verträglichen Säuren einerseits und Ammonium- und/oder Kaliumionen andererseits gebildeten Salzen ausgewählte Düngerverbindung enthält.

4. Vorrichtung nach einem der Ansprüche 2 und 3, dadurch gekennzeichnet, dass der Ueberzug unter synthetischen Homopolymeren und Mischpolymeren, hydrophoben Naturprodukten, elementarem Schwefel und diesen enthaltenden Zusammensetzungen sowie in der pharmazeutischen Industrie für enterische Implantate und Pillen gebräuchlichen Materialien ausgewählt ist.

5. Vorrichtung nach Anspruch 1, dadurch gekennzeichnet, dass der körnige Langzeitdünger aus einer oder mehreren wasserunlöslichen Substanzen, die sich jedoch bei Berührung mit Wasser langsam zu wasserlöslichen Substanzen zersetzen, besteht.

6. Vorrichtung nach Anspruch 5, dadurch gekennzeichnet, dass die unlösliche(n) Substanz oder Substanzen unter Cyanuramid, ammonisiertem Leonhardit, Ammoniummetallpolyphosphaten, Phosphazenen und mehr oder weniger hoch polymerisierten, aus Harnstoff mit Formaldehyd, Acetaldehyd, Isobutyraldehyd, Crotonaldehyd oder Glyoxal gebildeten Kondensaten ausgewählt sind.

7. Vorrichtung nach einem der Ansprüche 1 bis 6, dadurch gekennzeichnet, dass die durchlässige Folie unter Papieren, Filzen, Vliesstoffen, Geweben, natürlichen oder synthetischen Schwämmen, gefritteten Polymeren und durchlöcherten Filmen aus plastomerem oder elastomerem Material ausgewählt ist.

8. Vorrichtung nach Anspruch 7, dadurch gekennzeichnet, dass als durchlässige Folie ein Vliesstoff vorliegt, der unter solchen mit noimaler Bahn oder mit nach dem Trocken- oder Nassverfahren erhaltenen Fasern verstärkter Bahn und nach dem Nadelverfahren erhaltenen ausgewählt ist.

9. Vorrichtung nach einem der Ansprüche 1 bis 8, dadurch gekennzeichnet, dass der flache Träger unter Papieren, Filzen, Vliesstoffen, Geweben, natürlichen oder synthetischen Schwämmen, gefritteten Polymeren, Filmen aus plastomerem oder elastomerem Material, Aluminium und mit einer hydrophoben Beschichtung versehenem Karton ausgewählt ist.

10. Vorrichtung nach einem der Ansprüche 1 bis 9, dadurch gekennzeichnet, dass der flache Träger undurchlässig und starr ist und um seinen Umfang herum eine nach oben weisende Kante besitzt.

11. Vorrichtung nach einem der Ansprüche 1 bis 10, dadurch gekennzeichnet, dass die Körner mittels Klebstoff auf dem flachen Träger befestigt sind.

12. Vorrichtung nach einem der Ansprüche 1 bis 11, dadurch gekennzeichnet, dass die durchlässige Folie mittels Klebstoff auf den Düngerkörnern befestigt ist.

13. Vorrichtung nach einem der Ansprüche 11 und 12, dadurch gekennzeichnet, dass der Klebstoff unter natürlichen Klebern und Leimen, tierischen und pflanzlichen Proteinen, Gelatinen, Albuminen, Caseinen, Zuckern, Polysacchariden, Asphalten, Wachsen, Paraffinen, natürlichem oder synthetischem Kautschuk, Natriumsilikat sowie homopolymeren oder copolymeren synthetischen Wachsen oder Harzen ausgewählt ist.

14. Vorrichtung nach Anspruch 13, dadurch gekennzeichnet, dass der Klebstoff wasserlöslich ist.

15. Vorrichtung nach einem der Ansprüche 13 und 14, dadurch gekennzeichnet, dass der Klebstoff einen Weichmacher enthält.

16. Vorrichtung nach einem der Ansprüche 14 und 15, dadurch gekennzeichnet, dass der Klebstoff einen wasserlöslichen Weichmacher enthält.

17. Vorrichtung nach einem der Ansprüche 1 bis 16, dadurch gekennzeichnet, dass die durchlässige Folie mit ihrem Umfang auf dem Umfang des flachen Trägers befestigt ist.

18. Vorrichtung nach Anspruch 17, dadurch gekennzeichnet, dass die Befestigung durch Kleben in der Kälte oder Wärme, Schweissen, Heftklammern oder Nähen erfolgt.

19. Vorrichtung nach einem der Ansprüche 1 bis 18, dadurch gekennzeichnet, dass sie zusätzlich von einem Düngemittel verschiedene Langzeitkörner enthält, die unter solchen ein oder mehrere Spurenelemente, Algizide, Fungizide, Insektizide, Nematozide oder Wachstumsregulatoren enthaltenden ausgewählt sind.

## Claims

1. Device for the permanent nutrition of pot plants and containing a granulated slow-release fertiliser comprising at least one fertilising element selected from nitrogen, phosphorus and potassium, said device being characterised in that it consists of a flat support, on the upper face of which the fertiliser granules adhere, and a water-permeable sheet covering the flat support so that the granules are enveloped.

2. Device according to claim 1 characterised in that the granulated slow release fertiliser consists of a water-Soluble fertiliser nucleus surrounded by a barrier only slightly permeable to water.

3. Device according to claim 2 characterised in that the water-soluble fertiliser contains at least one fertilising composition selected from urea and its soluble derivatives; the salts formed from nitric acid and/or phosphoric acid, on the one hand, and alkaline and/or ammonium ions, on the other hand, and the salts formed from agriculturally acceptable acids other than the above acids, on the one hand, and ammonium and/or potassium ions, on the other hand.

4. Device according to either of claims 2 or 3 characterised in that the barrier is selected from synthetic homopolymers and copolymers, natural hydrophobic products, elemental sulphur and compositions containing it and materials used in the pharmaceutical industry for producing enteric implants and pills.

5. Device according to claim 1 characterised in that the granulated slow-release fertiliser consists of one or more substances which are water-insoluble but which degrade slowly in contact with water to give water-soluble substances.

6. Device according to claim 5 characterised in that the insoluble substance or substances are selected from cyanuramide, ammoniated Leonardite, metallic ammonium polyphosphates, phosphazenes and more or less highly polymerised condensates formed from urea and formaldehyde, acetaldehyde, isobutyraldehyde, crotonaldehyde or glyoxal.

7. Device according to any one of claims 1 to 6 characterised in that the permeable sheet is selected from papers, felts, non-woven fabrics, tissues, natural or synthetic sponges, fused polymers, and perforated films of plastomeric or elastomeric material.

8. Device according to claim 7 characterised in that the permeable sheet is a non-woven fabric selected from normal voile or voile reinforced by fibres obtained by the dry or wet method, and those produced by aiguilletage.

9. Device according to any one of claims 1 to 8 characterised in that the flat support is selected from papers, felts, non woven fabrics, tissues, natural or synthetic sponges, fused polymers, films of plastomeric or elastomeric materials, aluminium and pasteboard coated with a hydrophobic covering.

10. Device according to any one of claims 1 to 9 characterised in that the flat support is impermeable and rigid and has, on its circumference, an upwardly directed rim.

11. Device according to any one of claims 1 to 10 characterised in that the granules are fixed on the flat support by means of an adhesive.

12. Device according to any one of claims 1 to 11 characterised in that the permeable sheet is fixed on the fertiliser granules by means of an adhesive.

13. Device according to either of claims 11 or 12 characterised in that the adhesive is selected from natural sizes and glues, animal and vegetable proteins, gelatines, albumins, caseins, sugars, polysaccharides, asphalts, waxes, paraffins, natural or synthetic rubhers, sodium silicate and synthetic homopolymeric or copolymeric waxes and resins.

14. Device according to claim 13 characterised in that the adhesive is water-soluble.

15. Device according to either of claims 13 or 14 characterised in that the adhesive contains a plasticiser.

16. Device according to either of claims 14 or 15 characterised in that the adhesive contains a water-soluble plasticiser.

17. Device according to any one of claims 1 to 16 characterised in that the permeable sheet is fixed, by its circumference, on the circumference of the flat support.

18. Device according to claim 17 characterised in that the fixing is carried out by hot or cold glueing, welding, stapling or sewing.

19. Device according to any one of claims 1 to 18 characterised in that it additionally contains slow-release granules other than a fertiliser and selected from those containing one or more trace elements, algicides, fungicides, insecticides, nematocides or growth regulators.

## Revendications

1. Dispositif assurant la nutrition permanente des plantes en pot, contenant un engrais en grains de longue durée qui contient au moins un élément d'engrais choisi parmi l'azote, le phosphore et le potassium, caractérisé par le fait qu'il est constitué d'un support plat à la face supérieure duquel adhèrent les grains d'engrais, et d'une feuille de couverture sur le support plat, qui est perméable à l'eau et qui retient les grains.

2. Dispositif selon la revendication 1, caractérisé par le fait que l'engrais en grains de longue durée est constitué d'un noyau composé d'un engrais soluble dans l'eau et muni d'un revêtement ayant une perméabilité à l'eau réduite.

3. Dispositif selon la revendication 2, caractérisé par le fait que l'engrais aoluble dana l'eau contient au moins un composé d'engrais choisi parmi l'urée et ses dérivés solubles, les sels formés à partir d'acide nitrique et/ou d'acides phosphoriques d'une part et d'ions alcalins et/ou d'ammonium d'autre pert et les sels formés à partir des différenta acides precédents, agronomiquement compatibles d'une part et des ions d'ammonium et/ou de potassium d'autre part.

4. Dispositif selon une des revendications 2 et 3, caractérisé par le fait que le revêtement est choisi parmi les homopolymères et copolymères synthétiques, les produits naturels hydrophobes, le soufre élémentaire et les compositions en contenant ainsi que parmi les produits usuels dans l'industrie pharmaceutique pour les implants et pilules entériques.

5. Dispositif.selon la revendication 1, caractérisé par le fait que l'engrais en grains de longue durée se composé d'une ou plusieurs substances insolubles dans l'eau qui, cependant, se décomposént lentement en substances solubles dans l'eau par contact avec l'eau.

6. Dispositif selon la revendication 5, caractérisé par le fait que la ou les substance(s) insoluble(s) sont choisies parmi le cyanuramide, la léonhardtite ammonisée, les polyphosphates métalliques d'ammonium, les phosphszènes et les produits de condensation formés à partir de l'urée avec le formaldéhyde, l'acétaldéhyde, l'isobutyraldéhyde, le crotonaldéhyde ou le glyoxal, plus ou moins fortement polymérisés.

7. Dispositif selon une des revendications 1 à 6, caractérisé par le fait que la feuille perméable est choisie parmi les papiers, les feutres, les tissus non tisséa, les tissus, les éponges naturelles ou synthéticues, les polymères frittés et les films perforés en matière plastomère ou élastomère.

8. Dispositif selon la revendication 7, caractérisé par le fait que, comme feuille perméable, il y a un tissu non tissé qui est choisi parmi ceux ayant un lé normal ou ayant un lé renforcé de fibres obtenues selon le procédé à sec ou par voie humide et ceux obtenus par couture.

9. Dispositif selon une des revendications 1 à 8, caractérisé par le fait que le support plat est choisi parmi les papiers, les feutres, les tissus non tisses, les tissus, les éponges naturelles ou synthétiques, les polymères frittés, les films en matière plastomère ou élastomère, l'aluminium et le carton muni d'un revêtement hydrophobe.

10. Dispositif selon une des revendications 1 à 9, caractérisé par le fait que le support plat est imperméable et rigide et possède tout autour de sa circonférence un bord allant vers le haut.

11. Dispositif selon une des revendications 1 à 10, caractérisé par le fait que les grains sont fixes sur le support plat au moyen de colle.

12. Dispositif selon une des revendications 1 à 11, caractérisé par le fait que la feuille permeable est fixée sur les grains d'engrais au moyen de colle.

13. Dispositif selon une des revendications 11 et 12, caractérisé par le fait que la colle est choisie parmi les colles fortes et colles végétales naturelles, les proteines animales et végétales, les gélatines, les albumines, les caséines, les sucrès, les polysaccharides, les asphaltes, les cîres, les paraffines, le caoutchouc naturel ou synthétique, le silicate de sodium ainsi que les cires ou resines synthetiques homopolymères ou copolymeres.

14. Dispositif selon la revendication 13, caractérisé par le fait que la colle est soluble dans l'eau.

15. Dispositif selon une des revendications 13 et 14, caractérisé par le fait que la colle contient un plastifiant.

16. Dispositif selon une des revendications 14 et 15, caractérisé par le faît que la colle contient un plastifiant soluble dans l'eau.

17. Dispositif selon une des revendications 1 à 16, caractérisé par le fait que la feuille perméable est fixée par tout son pourtour sur le pourtour du support plat.

18. Dispositif selon la revendication 17 caractérisé par le fait que la fixation est réalisée par collage ou à chaud, par soudage, par agrafes ou par couture.

19. Dispositif selon une des revendications 1 à 18, caractérisé par le fait qu'il contient en plus d'un engrais differents grains de longue durée qui sont choisis parmi ceux contenant un ou plusieurs oligo-élements, das algicides, des fongicides, des insecticides, des nématocides ou des agents régulateurs de croissance.